# EUROPEAN PATENT SPECIFICATION

(11) **EP 2 707 415 B1**
(45) Date of publication and mention of the grant of the patent: **14.12.2016**
(21) Application number: 13711966.5
(22) Date of filing: 05.02.2013
(51) Int. Cl.: C08K 3/20, C08K 3/00, C08K 3/22, C08G 67/02

(54) **A POLYMER COMPOSITION AND A PRODUCTION METHOD THEREOF**
POLYMERZUSAMMENSETZUNG UND HERSTELLUNGSVERFAHREN DAFÜR
COMPOSITION POLYMÈRE ET SON PROCÉDÉ DE PRODUCTION

(30) Priority: 16.03.2012 TR 201108043
(43) Date of publication of application: 19.03.2014
(73) Proprietor: Kordsa Global Endustriyel Iplik ve Kord Bezi Sanayi ve Ticaret Anonim Sirketi, 41310 Kocaeli (TR)
(72) Inventor: SEN, Yasin, 41310 Kocaeli (TR); CELIK, Ceyhan, 41310 Kocaeli (TR)
(74) Representative: Dericioglu Kurt, Ekin
(86) International application number: PCT/IB2013/050950
(87) International publication number: WO 2013/136197

(56) References cited:
- EP-A2- 0 171 604
- FR-A1- 2 947 277
- US-A1- 2002 113 066
- US-A1- 2009 127 253

## Description

### Field of the Invention

The present invention relates to a polymeric composition comprising an aliphatic polyketone processed with ferromagnetic nano-sized iron oxide particles, and a production method thereof.

### Background of the Invention

Aliphatic polyketones obtained by alternating copolymerization of carbon monoxide and olefins are of considerable interest because they offer a unique set of physical and chemical properties which made them suitable candidates for use as engineering plastics. This class of polymers consists of (a) perfectly alternating copolymer of carbon monoxide and ethylene and (b) terpolymers in which propylene is substituted for ethylene in amounts up to 6 mol %. The said polymers are semi-crystalline materials with high melting points and excellent hydrolytic stability. On the other hand, when they are kept in the melt state for too long, they can undergo aldol condensation reactions which result in crosslinking and viscosity buildup. Therefore, it is necessary to use caution during melt processing of these materials.

Japanese Patent document no JP07-000776, an application known in the state of the art, discloses a production method for polymeric film having excellent heat resistance as well as pressure and chemical resistance. In this method, polyketone polymer is mixed with fine particles to make a polyketone porous film having slit like fine narrow pores. The polymer with 40-95 wt% is mixed with 60-5 wt% fine particles such as calcium carbonate and crosslinked silicone resin; and fine porous poyketone films are prepared by stretching the mixture.

European patent applicaiton, 0455265A2, gives a general state of the art on heating of olefinic polymers having carbon monoxide as co-monomer by high frequency alaectromagnetic radiatio, especially microwaves.

United States Patent document no US2009127253, an application known in the state of the art, discloses temperature-controlled induction heating of polymeric materials. Induction heating technologies are used for processes such as welding, forging, bonding or setting polymeric materials. Controlled-temperature induction heating is obtained by using ferromagnetic particles having a specific Curie temperature. In an induction field, the ferromagnetic particles heat up until they reach their Curie temperature. This invention intends to bond thermoplastic materials and thermoset composites by making use of these particles.

### Summary of the Invention

The objective of the present invention is to realize a polyketone composition and a production method thereof wherein the said composition is prepared by mixing the polymer with ferromagnetic iron oxide particles; and shaped objects such as rods or films could be produced from this composition without sacrificing polymer mechanical properties which otherwise would deteriorate when conventional melt processing methods are employed.

A further objective of the present invention is to realize a polymer composition and a production method thereof wherein the polymeric mixture is molded by using an isostatic press.

Another objective of the present invention is to realize a polymer composition and a production method thereof wherein the molded article is heated through induction heating.

A further objective of the present invention is to realize a polymer composition which minimizes the degradation of the polymer by preventing the material within the polymer particles from melting, and a production method thereof.

### Detailed Description of the Invention

The polymer composition and a production method thereof realized to fulfill the objective of the present invention is illustrated in the accompanying figure, in which;

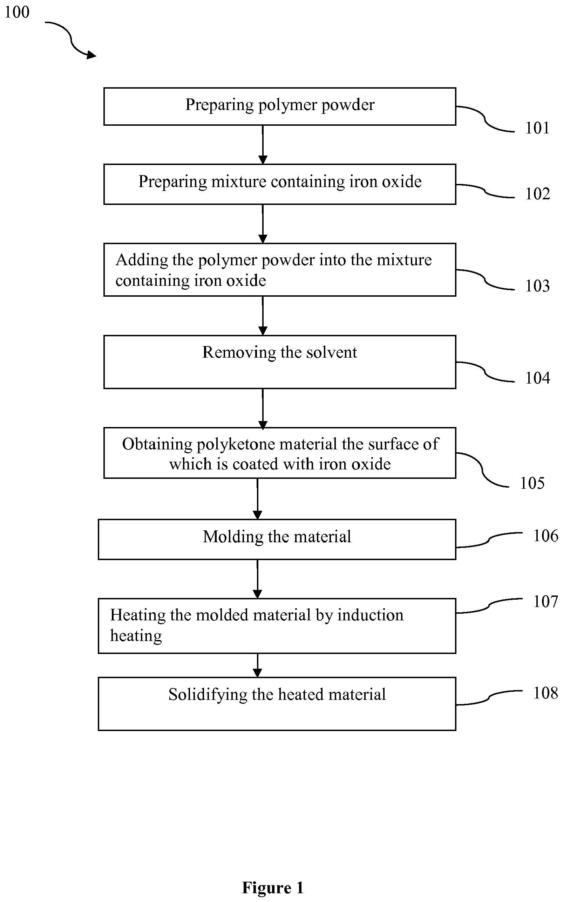

Figure 1 is the view of the flowchart of the polymer composition and a production method thereof.

The components in the figures are each given a reference number and the numbers refer to the following.

"Polymer composition and a production method thereof" (100) realized to fulfill the objective of the present invention comprises the steps of
- preparing polymer powder (101),
- preparing mixture containing iron oxide (102),
- adding the polymer powder into the mixture containing iron oxide (103),
- removing the solvent (104),
- obtaining polyketone material the surface of which is coated with iron oxide (105),
- molding the material (106),
- heating the molded material by induction heating (107),
- solidifying the heated material (108).

In the inventive polymer composition production method (100), first the polymer powder is prepared by grinding (101). In the preferred embodiment of the invention, the polymer used is a polyketone, namely, poly(1-oxotrimethylene); and the said polyketone polymer is produced by perfectly alternating copolymerization of ethylene and carbon monoxide under high pressure using a palladium-based catalyst.

In the step of preparing the mixture containing iron oxide (102), ferromagnetic iron oxide particles are mixed with a solvent. In the preferred embodiment of the invention, ferro-magnetic iron powders are nano-sized. In one embodiment of the invention, the solvent is hydrocarbon based. In another embodiment of the present invention, the solvent is water.

The polymer powder, which is previously prepared, is then added to the said mixture (103).

After the mixture containing polymer powder and iron oxide is stirred thoroughly, the solvent is evaporated (104).

After the solvent is removed (104), the polyketone material, the surface of which is coated with iron oxide, is obtained (105).

The said polymeric material is then molded using an isostatic press (106). After molding, a conductive network of iron oxide is formed around polymer particles.

After molding, the shaped article (e.g. rod or film) is heated through induction heating (107). In this method, the article is placed near an induction coil which generates a magnetic field. Upon induction heating, the ferromagnetic iron oxide on the surface of the polymer particle will heat up and eventually melt the outermost portion of the particle leading to fusion bonding of each polymer particle. By means of the said heating method the thermal degradation of the polymer is minimized.

Finally the resulting polymeric material is solidified by cooling (108). The said cooling process can be performed under isostatic press in order to prevent the generation of voids that may form as a result of the shrinkage of the material during cooling.

The solidified material can then be machined using lathe and the like to make semi-conductive, thermally conductive, heat and solvent resistant, magnetic field-responsive articles or films for electronics, medical or chemical industry.

Within the framework of these basic concepts, it is possible to develop a wide variety of embodiments of the inventive polymer composition and production method thereof (100). The invention cannot be limited to the examples described herein; it is essentially according to the claims.

## Claims

1. Method for production of a polymer composition (100) mainly comprising the steps of
- preparing polymer powder (101),
- preparing mixture containing iron oxide (102),
- adding the polymer powder into the mixture containing iron oxide (103),
- removing the solvent (104),
- obtaining aliphatic polyketone material the surface of which is coated with iron oxide (105),
- molding the material (106),
- heating the molded material by induction heating (107),
- solidifying the heated material (108) and **characterized in that**
- using the aliphatic polyketone polymer in the step of preparing polymer powder (101),
- using nano-sized ferromagnetic iron oxide particles in the step of preparing the mixture containing iron oxide (102),
- using isostatic press in the step of molding the material (106),
- employing induction heating method in the step of heating the molded material (107).

2. Method for production of a polymer composition (100) according to claim 1, **characterized in that** the aliphatic polyketone polymer used in the step of preparing the polymer powder (101) is produced by perfectly alternating copolymerization of ethylene and carbon monoxide under high pressure using a palladium-based catalyst.

3. Method for production of a polymer composition (100) according to any one of the preceding claims, **characterized in that** the solvent used in the step of preparing the mixture containing iron oxide (102) is a hydrocarbon-based solvent.

4. Method for production of a polymer composition (100) according to claim 1 to 2, **characterized in that** the solvent used in the step of preparing the mixture containing iron oxide (102) is water.

5. A polymer composition obtained by a method according to any one of the preceding claims.

6. Use of a polymer composition according to claim 5 for production of articles and films, which are semi-conductive, thermally conductive, heat and solvent resistant and magnetic field-responsive, by being processed in machines such as lathe and the like.

## Patentansprüche

1. Verfahren zur Herstellung einer Polymerzusammensetzung (100) umfassend hauptsächlich die folgenden Verfahrensschritte,
- Aufbereiten des Polymerpulvers (101),
- Aufbereiten der die Eisenoxide enthaltenden Mischung (102),
- Hinzufügen des Polimerpulvers in die die Eisenoxide enthaltenden Mischung (103),
- Entfernen des Lösungsmittels (104,
- Erhalten der aliphatischen Polyketon-Material, dessen Oberfläche mit Eisenoxide beschihtet ist (105),
- Ausformung des Materials (106),
- Erwärmen des ausgeformten Materials durch Induktionserwärmung (107),
- Verfestigung des erwärmten Materials (108) und **gekennzeichnet durch**
- Verwendung von aliphatischen Polyketon-Polymer im Schritt der Aufbereitung von Polymerpulver (101),
- Verwendung von nanoskaligen ferromagnetischen Eisenoxidpartikeln im Schritt der Aufbereitung von der Mischung, die die Eisenoxide beinhaltet (102),
- Verwendung der Isostatpresse im Schritt der Ausformung des Materials (106),
- Anwendung des Induktionserwärmungs-Verfahrens im Schritt des Erwärmens des ausgeformten Materials (107).

2. Verfahren zur Herstellung einer Polymerzusammensetzung (100) gemäß Anspruch 1, **dadurch gekennzeichnet, dass** das aliphatische Polyketon-Polymer, das im Schritt des Aufbereitens von Polymerpulver (101) eingesetzt wurde, durch völlig alternierende Copolymerisation von Äthylen und Kohlenmonoxid unter Hochdruck hergestellt ist, wobei ein auf Palladium basierender Katalysator verwendet wird.

3. Verfahren zur Herstellung einer Polymerzusammensetzung (100) gemäß einem der vorangehenden Ansprüche, **dadurch gekennzeichnet, dass** das Lösungsmittel, das im Schritt des Aufbereitens von der die Eisenoxide enthaltenden Mischung (102) ein auf Kohlenwasserstoff basierendes Lösungsmittel ist.

4. Verfahren zur Herstellung einer Polymerzusammensetzung (100) gemäß Anspruch 1, **dadurch gekennzeichnet, dass** das Lösungsmittel, das im Schritt des Aufbereitens von der die Eisenoxide enthaltenden Mischung eingesetzt wurde, Wasser ist.

5. Eine Polymerzusammensetzung, die durch ein Verfahren gemäß einem der vorangehenden Ansprüche gewonnen wurde.

6. Verwendung einer Polymerzusammensetzung gemäß Anspruch 5 zur Herstellung von Artikeln und Folien, welche halbleitend, wärmeleitend, hitze-und lösemittelfest und auf Magnetfeld reagierend sind, indem diese durch Maschinen wie Drehbänken und ähnlichen bearbeitet wurden.

## Revendications

1. Méthode pour la production d'une composition polymérique comportant essentiellement les étapes de
- préparer une poudre polymérique (101),
- préparer une mixture contenant de l'oxyde de fer (102),
- ajouter la poudre polymérique dans la mixture contenant de l'oxyde de fer (103),
- éliminer le solvant (104),
- obtenir le matériau polykétone aliphatique dont la surface est revêtue de l'oxyde de fer (105),
- mouler le matériau (106),
- chauffer le matériau moulé par le chauffage d'induction (107),
- solidifier le matériau chauffé (108) et **caractérisée en ce qu'on**
- utilise le polymère polykétone aliphatique dans l'étape de préparer le poudre polymérique (101),
- utilise les particules de l'oxyde de fer ferromagnétique nanométrique dans l'étape de préparation de la mixture contenant de l'oxyde de fer (102),
- utilise la presse isostatique dans l'étape de moulage du matériau (106),
- applique la méthode de chauffage par induction dans l'étape de chauffage du matériau moulé (107).

2. Méthode pour la production d'une composition polymérique (100) selon la revendication 1, **caractérisé en ce que** le polymère polykétone aliphatique utilisé dans l'étape de préparation de la poudre polymérique (101) est produit parfaitement en alternant la copolymérisation de l'éthylène et du monoxyde de carbone sous haute pression en utilisant un catalyseur à base de palladium.

3. Méthode pour la production d'une composition polymérique (100) selon l'une quelconque des revendications précédentes, **caractérisé en ce que** le solvant utilisé dans l'étape de préparation de la mixture contenant de l'oxyde de fer (102) est un solvant à base d'hydrocarbure.

4. Méthode pour la production d'une composition polymérique (100) selon la revendication 1 à 2, **caractérisé en ce que** le solvant utilisé dans l'étape de préparation de la mixture contenant de l'oxyde de fer (102) est l'eau.

5. Une composition polymérique obtenue par la méthode selon l'une quelconque des revendications précédentes.

6. Utilisation d'une composition polymérique selon la revendication 5 pour la production des articles et films qui sont semi-conducteurs, thermiquement conducteurs, résistants contre la chaleur et le solvant, et réactifs au champ magnétique, en la traitant dans les machines telles que le tour et cetera.
